## Europäisches Patentamt
## European Patent Office
## Office européen des brevets

(19)

(11) Veröffentlichungsnummer: **0 100 562**
**B1**

# EUROPÄISCHE PATENTSCHRIFT

(12)

(45) Veröffentlichungstag der Patentschrift:
08.04.87

(21) Anmeldenummer: **83107916.5**

(22) Anmeldetag: **10.08.83**

(51) Int. Cl.⁴: **A 61 B 6/02**, G 01 N 23/04

(54) **Vorrichtung zur Herstellung von Röntgenbildern von Körpern.**

(30) Priorität: **11.08.82 DE 3229914**

(43) Veröffentlichungstag der Anmeldung:
**15.02.84 Patentblatt 84/7**

(45) Bekanntmachung des Hinweises auf die Patenterteilung:
**08.04.87 Patentblatt 87/15**

(84) Benannte Vertragsstaaten:
**AT BE CH DE FR GB IT LI LU NL SE**

(56) Entgegenhaltungen:
**DE-A-2 430 021**
**DE-A-2 814 242**
**DE-A-2 946 442**
**FR-A-2 350 613**
**FR-A-2 352 296**
**FR-A-2 404 427**

**PATENTS ABSTRACTS OF JAPAN, Band 6, Nr. 168(P-139)(1046), 2. September 1982**

(73) Patentinhaber: **Heimann GMBH, Weher Köppel 6, D-6200 Wiesbaden 1 (DE)**

(72) Erfinder: **Dönges, Gerhard, Dipl.- Ing., Am Markt 1, D-6209 Kemel (DE)**
Erfinder: **Koch, Cornelius, Dipl.- Ing., Heinrich- Heine- Strasse 6, D-6200 Wiesbaden (DE)**

(74) Vertreter: **Mehl, Ernst, Dipl.- Ing., Postfach 22 01 76, D-8000 München 22 (DE)**

**Beschreibung**

Die Erfindung betrifft eine Vorrichtung zur Erzeugung von Röntgenbildern von Körpern gemäß dem Oberbegriff des Patentanspruches 1.

Eine Vorrichtung mit wesentlichen Merkmalen dieser Art ist in der FR-A-2 352 296 beschrieben. Diese Vorrichtung dient für medizinische Untersuchungen, wobei sich der Röntgengenerator mit der Detektorzeile um den Körper dreht. Es ist ferner bekannt die Detektorzeile an einer Wand eines rechteckförmigen Prüfraumes anzuordnen. Dabei ergeben sich aber nichtlineare Verzerrungen der Abstände, die mit dem Abstand vom Lot auf die Detektorzeile größer werden.

Die Aufgabe, die der vorliegenden Erfindung zugrundeliegt, besteht in einer Kompensation der nichtlinearen Verzerrungen bei einer Vorrichtung gemäß dem Oberbegriff des Patentanspruchs 1, wobei möglichst weitgehend übliche Bauteile bzw. Geräte eingesetzt werden sollen.

Diese Aufgabe wird durch die kennzeichnenden Merkmale des Anspruches 1 gelöst.

Der Erfindung liegt die Erkenntnis zugrunde, daß die Änderung des Winkels des auftreffenden Röntgenstrahls zum Lot vom Röntgenstrahlgenerator auf die durch die beiden benachbarten Meßpunkte verlaufende Gerade für das Maß der nichtlineare Verzerrung ausschlaggebend ist. Diese Beziehung gilt sowohl für gerade Detektorzeilen als auch für beliebige gekrümmte Detektorzeilen, welche von der form eines Kreisbogens, dessen Mittelpunkt im Röntgenganerator liegt, abweichen. Auch Unstetigkeitsstellen im Profil der Detektorzeilen stören diese Beziehung nicht.

Die Änderung der Abstände der Meßpunkte hat außerdem den Vorteil, daß alle übrigen Bauteile und Geräte, insbesondere auch der Monitor, handelsübliche Bauteile sein können.

Die Erkenntnis, daß der Abstand zweier benachbarter Meßpunkte dem Kehrwert des Kosinus des Winkels des auftreffenden Röntgenstrahles zum Lot vom Röntgengenerator auf die durch die beiden benachbarten Meßpunkte verlaufende Gerade proportional ist, ermöglicht die Bestimmung der Abstände benachbarter Meßpunkte unabhängig vom Verlauf der Detektorzeile. Das Profil der Detektorzeile kann auch Unstetigkeitsstellen beinhalten.

Die Bemessungsregel des Patentbegehrens kann auch formelhaft geschrieben werden:

$$A_i = A_0 \frac{r_i}{\cos \delta i}$$

Hierbei bedeutet $A_i$ den Abstand zwischen den Meßpunkten mit den Nummern i und i + 1. Der Abstand $A_0$ kann nach dem einer vorgegebenen Anzahl von Bildpunkten je Zeile auf dem Monitor nach den Abmessungen des Gerätes bestimmt werden. Er gibt bei $r_i = 1$ den Abstand zweier Meßpunkte an, wenn das Lot vom Röntgengenerator auf die Verbinddungslinie zwischen den beiden Meßpunkten durch einen von diesen beiden Meßpunkten läuft.

Vorteilhaft sind Detektorzeilen an allen von der Röntgenstrahlung nach Durchlaufen des Prüfraums erreichbaren Wänden entlanggeführt.

Vorteilhaft enthält die Vorrichtung Detektorzeilen, welche in gleichmäßigem Abstand Detektoren enthalten, wobei nicht alle Detektoren als Meßpunkte zur Erzeugung von Bildpunkten eingesetzt werden und wobei der gegenseitige Abstand durch eine entsprechende Auswahl der eingesetzten Detektoren festgelegt wird. Diese Ausführungsform hat den Vorteil, daß seriemäßig vorgefertigte Detektorzeilen mit konstanten Abständen von Detektoren eingesetzt werden können. Dabei können mehrere vorgefertigte Detektorzeilen hintereinander angeordnet und zur Darstellung nur einer Zeile bei der Wiedergabe auf dem Monitor eingesetzt werden.

Die Erfindung wird nun anhand von zwei Figuren näher erläutert.

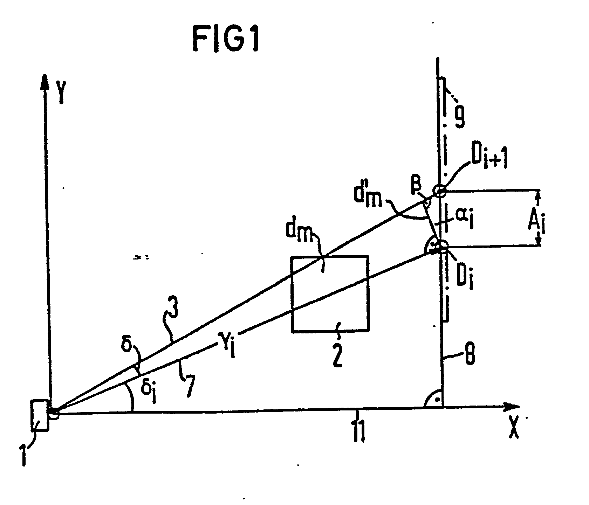

Fig. 1 zeigt die Korrektur der nichtlinearen Verzerrungen schematisch.

Fig. 2 und Fig. 3 zeigen, Beispiele einer erfindungsgemäßen Vorrichtung schematisch.

Von einem Röntgengenerator 1 gehen Röntgenstrahlen 3 und 7 aus. Der Röntgengenerator 1 ist als punktförmige Röntgenstrahlungsquelle zu betrachten. Ein Röntgenstrahl 7 erreicht nach dem Durchdringen des Körpers 2 den Röntgendetektor $D_i$ im Abstand $r_i$. Dieser Röntgenstrahl 7 bildet mit dem Lot vom Röntgengenerator 1 auf die Verbindungsgerade 8 zwischen den Röntgendetektoren $D_i$ und $D_{i+1}$ den Winkel δi.

Der differenzielle Bereich $d_m$ des Körpers 2 wird auf dem Flächenelement $d'_m$ ohne störende nichtlineare Verzerrung abgebildet. Die Abweichung des Winkels des Strahls 3 zum Flächenelement $d'_m$ von einem rechten Winkel ergibt keine nichtlineare Verzeichnung, wenn der Winkel δ zwischen benachbarten Röntgenstrahlen 3 und 7 konstant ist.

Das Flächenelement $d'_m$ bildet mit der Detektorzeile 9 den Winkel $α_i$. Der Abstand $A_i$ zwischen dem Detektor $D_i$ und dem Detektor $D_{i+1}$ ist proportional dem Kehrwert des Kosinus $δ_{ii}$ $A_i$ ist außerdem dem Abstand $r_i$ des Detektors $D_i$ vom Röntgengenerator 1 proportional. Daraus ergibt sich die Formel

$$A_i \sim \frac{r_i}{\cos \delta i}$$

Als Proportionalitätsfaktor wird zweckmäßig ein $A_0$ festgelegt, welches den gewünschten Abstand für $r_i = 1$ und δi = O darstellt. Dabei wird der Winkel zwischen den Röntgenstrahlen 3 und 7 automatisch berücksichtigt. Die Lage der Meßpunkte auf beliebig geformten Detektorzeilen wird auf einfache Weise zeichnerisch ermittelt, indem um den Röntgengenerator ein Kreis mit dem Radius 1 geschlagen wird, indem ausgehend von einem Strahl vom Röntgengenerator zu einem ersten Meßpunkt durch Antragen des Proportionalitätsfaktors $A_0$ die Richtung des Strahls zum nächsten Meßpunkt festgelegt und

indem der Strahl bis zur Detektorzeile verlängert wird. Der Schnittpunkt stellt den neuen Meßpunkt dar. Sofern der zu erfassende Raumwinkel festliegt, kann auch der entsprechende Winkelbereich des Einheitskreises durch die vorgesehene Zahl der Bildpunktabstände dividiert werden. Die Strahlen durch die so entstehenden Punkte auf dem Einheitskreis ergeben auf den Detektorzeilen unmittelbar die Lage der Meßpunkte.

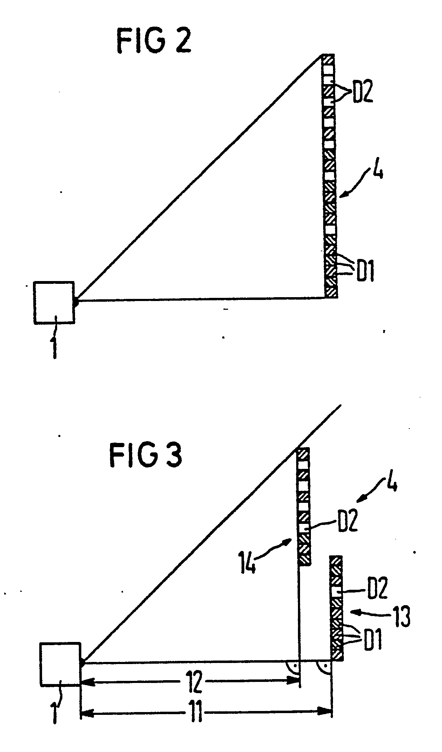

Die Fig. 2 und 3 zeigen eine vorgefertigte Detektorzeile 4 mit Röntgendetektoren D1, D2, welche in gleichmäßigen gegenseitigen Abständen in der Detektorzeile angeordnet sind. Die schraffiert dargestellten Detektoren D1 sind als Meßpunkte eingesetzt. Die nicht schraffiert dargestellten Detektoren D2 sind nicht als Meßpunkte eingesetzt. Durch die Auswahl der Detektoren D1 ist eine erfindungsgemäße Linearisierung des Bildes auf dem Monitor näherungsweise erreicht. Es können vorgefertigte und daher billige Detektorzeilen verwendet werden, die Auswahl der als Meßpunkte eingesetzten Detektoren D2 kann auf das jeweilige Gerät abgestimmt werden, ohne daß die Detektorzeile 4 geändert werden müßte.

Das Beispiel von Fig. 3 zeigt den Einsatz einer Detektorzeile 4, die aus kleineren Teilstücken 13, 14 zusammengesetzt ist und dadurch eine Unstetigkeitsstelle beinhaltet. Das Teilstück 14 ist zur Röntgengenerator 1 hin versetzt, so daß eine geringere Zahl von nicht eingesetzten Detektoren D2 notwendig ist als beim Beispiel von Fig. 2, bei dem die von dem Röntgengenarator 1 relativ weit entfernte Teile der Detektorzeile 4 bereits relativ viele nicht eingesetzte Detektoren D2 enthalten. Dieses Beispiel ist insbesondere für die Prüfung von Gegenständen vorteilhaft, welche in ihrem oberen Teil eine geringere Ausdehnung besitzen, als in ihrem unteren Teil.

Die Gleichung $A_i = A_0 \cdot \frac{r}{\cos \delta i}$ gilt für die beiden Teilstücke 13, 14 der Detektorzeile 4. Dabei muß für jeden geradelinigen Teil 13 bzw. 14 der Detektorzeile 4 für die Ermittlung der Abstände $A_i$ das auf die durch die Teile 13 bzw. 14 jeweils festgelegten Geraden gefällte Lot 11, 12 zugrundegelegt werden. Die Lote 11, 12 fallen im gezeigten Beispiel in ihrer Richtung zusammen und liegen vorteilhaft in der unteren Begrenzung des Prüfraumes.

Unabhängig von der form der Detektorzeilen ist stets mit der erfindungsgemäßen Dimensionierung auf einem handelsüblichen Monitor mit gleichen Zeilenabständen ein Bild ohne die störenden nichtlinearen Verzerrungen zu erreichen. Dabei ist eine Anpassung der Abstände an verschiedenen Ausführungsformen der Vorrichtung, beispielsweise an unterschiedliche Abstände der Detektorzeile zum Röntgengenerator möglich.

Bei dieser Ausführungsform wird eine einfache Ausgestaltung der Ansteuerung erreicht, indem die Abtastfrequenz so moduliert wird, daß die Gesamtzeit für eine einmalige vollständige Abtastung aller Detektorzeilen unverändert bleibt.

Anstelle der Detektorzeilen 4 mit gleichen Abständen zwischen den einzelnen Detektoren D1, D2 können auch Detektorzeilen ohne nicht eingesetzte Detektoren D2 verwendet werden, wenn die eingesetzten Detektoren D1 in unterschiedlichen, der genannten Gleichung für $A_i$ entsprechenden gegenseitigen Abständen angeordnet sind.

**Patentansprüche**

1. Vorrichtung zur Erzeugung von Röntgenbildern von Körpern (2), in der die Körper in einem Prüfraum relativ zu einem Röntgengenerator (1) bewegt werden und in der in Richtung der Röntgenstrahlung hinter den Körpern zumindest eine geradlinige Detektorzeile (4, 9) angeordnet ist, deren Detektoren als Meßpunkte dienen können und die Intensität der ankommenden Röntgenstrahlung messen, wobei die Meßwerte einer Einrichtung zur Erzeugung eines aus einzelnen Bildpunkten zusammengesetzten sichtbaren Bildes zugeführt werden und die Helligkeit jedes Bildpunktes des sichtbaren Bildes entsprechend einem Meßwert eines Meßpunktes der Detektorzeile eingestellt wird, dadurch gekennzeichnet, daß die Bildpunkte des sichtbaren Bildes gegenüber den jeweils benachbarten Bildpunkten gleiche Abstände aufweisen und daß die gegenseitigen Abstände ($A_i$) benachbarter Meßpunkte in der Detektorzeile proportional zum Produkt aus dem Abstand ($r_i$) zum Röntgengenerator (1) und dem Kehrwert des Kosinus des Winkels ($\delta i$) des auftreffenden Röntgenstrahles zum Lot vom Röntgengenerator (1) auf die durch die beiden benachbarten Meßpunkte ($D_1$, $D_{i+1}$) verlaufende Gerade bemessen sind.

2. Vorrichtung nach Anspruch 1, dadurch gekennzeichnet, daß sie eine oder mehrere Detektorzeilen enthält, daß die Detektorzeilen Detektoren mit gleichen gegenseitigen Abständen enthalten, daß nicht alle Detektoren als Meßpunkte zur Erzeugung von Bildpunkten eingesetzt sind und daß der gegenseitige Abstand ($A_i$) durch eine entsprechende Auswahl der eingesetzten Detektoren festgelegt ist.

3. Vorrichtung nach Anspruch 1, dadurch gekennzeichnet, daß Detektorzeilen an allen von der Röntgenstrahlung nach Durchlaufen des Prüfraumes erreichbaren Wänden entlang geführt sind.

**Claims**

1. A device for the production of X-ray images of bodies, wherein the bodies are moved relative to an X-ray generator (1) in a testing room and wherein at least one rectilinear line of detectors (4, 9) is arranged bahind the bodies in the direction of the X-ray radiation, the detectors of which detector lines can serve as measuring points and measure the intensity of the incoming X-ray radiation where the measured values are supplied to an apparatus for producing a visible image which consists of individual image dots and the brightness of each image dot of the visible image is adjusted in accordance with the measured value of a measuring point of the detector line, <u>characterised in</u> that the image dots of the visible image have the same spacings in relation to the respectively adjacent image dots and that tha mutual spacings ($A_i$) of adjacent measuring points in tha detector line are dimensioned so as to be proportional to the product of the distance ($r_i$) to the X-ray generator (1) and the inverse value of the cosinues of the angle ($\delta i$) of the impinging X-ray to tha perpendicular from the X-ray generator (1) to the straight line which runs through the two adjacent measuring points ($D_i$, $D_{i+1}$).

2. A device as claimed in claim 1, <u>characterised in</u> that it comprises one or more detector lines, that the detector lines comprise detectors with the same mutual spacing, that not all detectors are employad as measuring points for the production of image dots, and that the mutual spacing ($A_1$) is determined by an appropriate selection of the employed detectors.

3. A device as claimed in claim 1, <u>characterised</u> in that detector lines are arranged at all walls of the testing room, which are reached by the X-ray radiation after passing the testing room.

**Revendications**

1. Dispositif pour réaliser des radiographies de corps (2) et dans lequel les corps sont déplacés dans un espace d'examen par rapport à un générateur radiologique (1) et dans lequel se trouve disposée, en arrière des corps dans la direction du rayonnement X, au moins une rangée rectiligne de détecteurs (4, 9), dont les détecteurs peuvent servir de points de mesure et mesurent l'intensité du rayonnement X incident, et dans lequel les valeurs de mesure sont envoyées à un dispositif servant à produire une image visible formée par la réunion de points d'image individuels et la luminosité de chaque point de l'image visible est réglée conformément à une valeur de mesure d'un point de mesure de la rangée de détecteurs, caractérisé par le fait que les points de l'image visible sont à des distances identiques par rapport aux points d'image respectivement voisins et que les distances réciproques ($A_i$) de points de mesure voisins dans la rangée de détecteurs, sont dimensionnées de manière à être proportionnelles au produit de la distance ($r_i$) par rapport au générateur radiologique (1) par l'inverse du cosinus de l'angle ($\delta i$) que fait le rayonnement X incident par rapport à la droite passant par le générateur radiologique (1) et perpendiculaire à la droite passant par les deux points voisins de mesure ($D_i$, $D_{i+1}$).

2. Dispositif suivant la revendication 1, caractérisé par le fait qu'il contient une ou plusieurs rangées de détecteurs, que les rangées de détecteurs comportent des détecteurs situés à des distances réciproques identiques, que les détecteurs ne sont pas tous utilisés en tant que points de mesure pour la formation de points d'image et que la distance réciproque ($A_i$) est fixée au moyen d'un choix correspondant des détecteurs utilisés.

3. Dispositif suivant la revendication 1, caractérisé par le fait que des rangées de détecteurs s'étendent le long de toutes les parois pouvant être atteintes par le rayonnement X après traversée l'espace d'examen.

# FIG1

# FIG 2

# FIG 3